# EUROPEAN PATENT APPLICATION

(11) **EP 2 530 633 A1**
(43) Date of publication of application: **05.12.2012**
(21) Application number: 11305674.1
(22) Date of filing: 01.06.2011
(51) Int. Cl.: G06Q 10/00

(54) **Method and system for dynamic user profile handling and management**

(71) Applicant: Amadeus S.A.S., 06410 Biot (FR)
(72) Inventor: Llopis, Marion, 06600 Antibes (FR); Parchkova, Marina, 06560 Valbonne (FR); Vallet, Christophe, 06600 Antibes (FR); Fohom Fotzo, Stephane, 06000 Nice (FR)
(74) Representative: Anderson, Angela Mary

(57) **Abstract**

A method of generating a dynamic user profile for a user accessing products and/or services from a Travel Agent based on customer defined rules, the method comprising: determining via a computer a static user profile for a particular use case; determining via a computer one or more customer defined rules that apply to the use case; and determining via a computer a set of required fields for the dynamic user profile for the use case based on the applicable customer defined rules using the dynamic user profile to collect the required fields from the user in use.

## Description

### Field of the invention

The present invention relates to a method and system for dynamic profile user handling and management, particularly in respect to the travel industry.

### Background of the invention

In the travel industry there are a number of Travel Agents or other travel providers (hereinafter referred to as Travel Agents or TAs) which provide bespoke travel solutions for corporations and companies.

In these types of situations the TA can manage all the travel for the employees of a particular corporation. This means that the corporation can mandate rules and regulations for all travel purchased for business purposes by the employees of the corporation. In addition to the corporation rules, the TA may also need to manage other business rules, for example based on country, region, etc. The combination of rules under which the TA must operate are vast and complex.

One way in which the travel industry has started to address the vast, complex management issues is to make use of user profiles.

The Travel industry has initially focused on the delivery of very specialized travel reservation services for offline and online channels. These include traditional point-of-sales applications, mid-and-back office applications, self-booking tools, etc. Some peripheral services, such as profile management, have also been developed but are designed to support just the very specialized reservation services.

As a result, most of the profile management has become as specialized as the travel reservation services they are used within. All include specific databases, data structures and data flows for each channel, customer or corporation. The technology infrastructure, which has supported these profile services, is based on multiple proprietary segmented solutions, which makes it difficult to share profile data across different systems.

Travelers have also started to seek a global travel shopping approach across multiple channels. These new approaches and other economic and competitive factors have strengthened the need for TAs to deliver consistent global services across all channels. An effect of this has driven the need for a dedicated repository of profile data offering a central storage and the distribution of this profile data towards all necessary downstream systems, including but not limited to Global Distribution Systems (GDS) and Self Booking Tools (SBT).

An important metric to measure the success of a TA is the volume of bookings. The quality of the customer profile data is a metric, which although not often used and difficult to compute would be a useful tool, despite the fact that at present, a significant part of the bookings are processed in a profile-less mode.

Business practices are changing and profile has become an important element for competitive business differentiation. In particular, accurate profile data does not only allow a TA to provide travelers with personalized offers, but also allows optimization of the front-to-back integration processes (i.e. from point-of-sales to mid-and-back office, etc.), and the customer-care related processes (i.e. data-mining, customer relationship management (CRM), analytics, etc.).

To ensure the quality of profile data, a profile structure has to be defined. The profile structure precisely describes the constraints applicable to a profile: which fields can be used (e.g. name, address, passport, etc.); what are the constraints of each field (e.g. length, characters, regular expression, etc.); and what are the attributes of each field (e.g. mandatory, optional, default values, editable only by travel agents, etc.). For user profiles access, administration and data quality are important. The use of static access control capabilities depending on permissions has been proposed. US 2002/0143961 discloses a customer profile access protocol with static access control capabilities using the role of user to control access to the profile. The protocol facilitates a set of permissions to access user profile data. The permissions are based on the type of users and may specify different permissions for different profile fields.

The prior art fails to address a number of problems. At present, any profile driven system has static structures which have a tendency to lower data quality. In addition, the control of data access and data quality is not optimized.

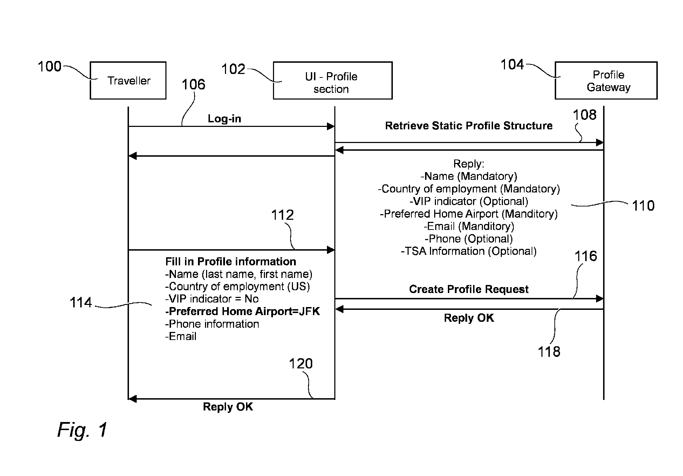

A further problem with existing systems is described with reference to Figure 1. Changes to user profiles can occur in the normal course of business. For example, an employee may be relocated from France to USA. In a user profile for USA, a field "TSA" is mandatory whilst in France it is optional. Present systems provide no ability to correctly update the user profile to force entry of the TSA field. As a result, after relocation the user profile is inaccurate but the system is unaware of this. Only subsequent actions in respect to the user profile recognize the inaccuracy and require action to correct this which is time consuming and unnecessary at this point.

Figure 1 shows the steps occurring between a traveler or user 100; a user interface profile section 102; and a profile gateway 104. The user logs in at step 106 and the UI retrieves a static profile structure 108 from the profile gateway. The profile details are shown in the reply 110. TSA is optional as the profile relates to someone in France. The user fills in the information required (step 112) and as the user is now based in USA (see information 114), the TSA should now be mandatory. However, the system does not recognize this and the user is not prompted to enter this field. The UI requests creation of a profile at step 116 and this is acknowledged and accepted in steps 118 and 120. The acceptance is wrong, but the system is unaware of the error.

A subsequent booking flow is then interrupted by the need to add the TSA information. The requirement to add the TSA field will continue until the user or agent actively updates the user profile to add the TSA field.

The prior art does not address the problems of controlling data access and data quality based on roles and rules thus fails to solve many existing problems. In addition, the prior art fails to teach any mechanism for dynamic user profile which can be readily updated and verified.

### Objects of the invention

It is an object of the present invention to overcome at least some of the problems associated with the prior art.

It is a further object of the present invention to provide a method and system for dynamic user profile handling and management.

### Summary of the invention

The present invention provides a method and system as set out in the accompanying claims.

According to one aspect of the present invention there is provided a method of generating a dynamic user profile for a user accessing products and/or services from a Travel Agent based on customer defined rules, the method comprising: determining via a computer a static user profile for a particular use case; determining via a computer one or more customer defined rules that apply to the use case; and determining via a computer a set of required fields for the dynamic user profile for the use case based on the applicable customer defined rules using the dynamic user profile to collect the required fields from the user in use.

Optionally, storing the dynamic user profile in a central database for access by the Travel Agent for future actions.

Optionally, the step of determining rules comprises determining rules which relate to the use case and apply to the user based on one or more particular fields relating to the user.

Optionally, collecting initial information from a user to determine the one or more particular fields.

Optionally, selecting via a computer a list of relevant rules from a repository of rules.

Optionally, validating the dynamic user profile.

According to a second aspect of the present invention there is provided a system for generating a dynamic user profile for a user accessing products and/or services from a Travel Agent based on customer defined rules, the system comprising: a first module for determining via a computer a static user profile for a particular use case; a search module for determining via a computer one or more customer defined rules that apply to the use case; a second module for determining via a computer a set of required fields for the dynamic user profile for the use case based on the applicable customer defined rules using the dynamic user profile to collect the required fields from the user in use.

This invention provides many advantages. These include the ability to control data access and data quality based on roles and rules defined by a corporation for different users. In addition, the invention provides a dynamic user profile which can be accessed, updated, verified and validated as is necessary for the use case.

### Brief description of the drawings

Reference will now be made, by way of example, to the accompanying drawings, in which:
Figure 1 is a flow diagram of a prior art process flow to demonstrate a problem,
Figure 2 is a block diagram of the system, in accordance with an embodiment of the invention,
Figure 3 is a flow diagram of a profile creation flow, in accordance with an embodiment of the invention,
Figure 4 is a flow diagram of a booking creation flow, in accordance with an embodiment of the invention.

### Detailed description of the preferred embodiments

User profile management is based on a profile structure definition. A user can define a static profile structure that will be applicable to the user of a specific corporation. In addition, in order to provide more flexibility to the user and keep the corporation structure as simple as possible, some profile fields parameters and values can be computed dynamically based on profile field rules. The profile field rules are important in the scope of a new corporation deployment, or in the scope of existing corporation where maintenance or updates are needed.

The static profile structure describes the generic architecture of a profile for a given corporation and describes which fields are allowed; mandatory or not; the format of the field; the number of occurrences allowed; etc.

The following attributes are examples of attributes available in the profile structure. Some of the attributes can be updated by the user, whereas others are computed by the system. In any case, the attributes are taken into account in the validation process of the profile consistency with respect to the related profile structure. The attributes include: minimum number of occurrences; maximum number of occurrences; CreateSecurityLevel; UpdateSecurityLevel; DeleteSecurityLevel; ReadSecurityLevel; Default value; Uniqueness; and Format.

The CreateSecurityLevel attribute indicates the security level attached to the field. In the profile flow, this indicator is used together with the roles and permissions of the user to compute the appropriate value for the Create indicator. This could be Yes or No, indicating if the user has the right to create the profile field.

The UpdateSecurityLevel attribute indicates the security level attached to the field. In the profile flow, this indicator is used together with the roles and permissions of the user to compute the appropriate value for the Update indicator. This could be Yes or No, indicating if the user has the right to update the profile field.

The DeleteSecurityLevel attribute indicates the security level attached to the field. In the profile flow, this indicator is used together with the roles and permissions of the user to compute the appropriate value for the Delete indicator. This could be Yes or No, indicating if the user has the right to delete the profile field.

The ReadSecurityLevel attribute indicates the security level attached to this field. In the profile flow, this indicator is used together with the roles and permissions of the user to compute the appropriate value for the Read indicator. This could be Yes or No, indicating if the user has the right to read the profile field.

The Default value attribute gives the default value applicable to a given profile field.

The Uniqueness indicator attribute indicates if the field is unique across a corporation.

The Format attribute can be a regular expression such as a list of numerical characters, a Boolean operator, an enumeration, etc. If the Format is a regular expression, the Format Type which represents the regular expression is provided. If the Format is an enumeration, a Codeset List is provided. In addition, for certain conditions, the enumeration list values can be localized.

In addition to attributes that can be managed statically for a given corporation, profile structure can be dynamically managed based on rules which apply to some of the structure attributes.

One rule is an inclusion rule which impacts the number of occurrences allowed for a given field. This type of rule can impact either the minimum or the maximum or both minimum and maximum occurrences of the field. This is required so that TAs or Corporations may dynamically activate or mandate some profile fields.

Another rule is the default value rule which impacts the value of a field based on the value of another field. It impacts the "Default Value" attributes. This may be required to enable a TA or Corporation to dynamically manage the values of some profile fields that are linked to the corporation and not specific to individual travelers.

A further rule is the list restriction rule which impacts the list of values allowed for a given field. This has a direct impact on the Codeset list attribute of the field. This may be required to enable a TA or Corporation to dynamically restrict the values available for some profile fields

A still further rule is the security levels rule which impacts the level of security allowed for a given field. This has a direct impact on the "CreateSecurityLevel", the "UpdateSecurityLevel", the "DeleteSecurityLevel" and the "ReadSecurityLevel" attributes. This may be required to enable a TA or Corporation to dynamically restrict the access to some profile fields

Other rules may be used if necessary and will depend on the business circumstances and the Corporation's requirements. The rules may have one or more or no conditions. A condition is based on the value of a profile field. The field used as a condition will then be flagged in the profile structure. This can be useful for User Interface management to highlight to the end user that updating a field could impact the profile structure.

The present invention is based on a set of profile services accessible via a profile gateway, which can retrieve a static profile structure; retrieve rules; retrieve a dynamic profile structure corresponding to the structure with rules application; and retrieve and/or create and/or update a profile. Those services are then integrated into User Interfaces and thus facilitate the traveler profile management.

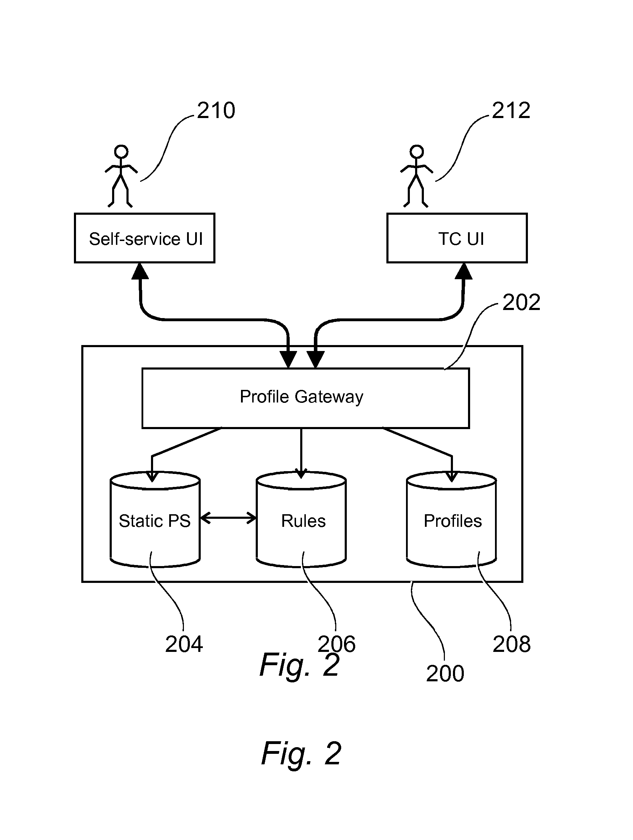

Figure 2 shows a diagram of the general architecture of the present invention. A profile system 200 includes a profile gateway 202 which is in communication with a static profile structure module 204; a rules module 206; and a profiles module 208. The system can be accessed by a traveler or user 210 via a self service user interface or by a travel company employee or agent 212 via a travel company user interface.

The present invention provides the ability to ensure a high level of quality in data collected from users belonging to a corporation. The invention allows the system to collect only data that is relevant for the user and the travel context where the system is used to perform a booking.

Rules can be used to activate or mandate one or more fields, to enforce the value of that field or to restrict the list of values available for a given enumeration. The following information gives conditions which may apply to a rule: market and/or country; division; position; employee type (staff or contractor); the profile manager (a profile can be managed by a user or by a travel agent on behalf of the profile owner); the profile user (a profile can be used to make a booking either by the user or by a colleague nominated as a travel arranger on behalf of the profile owner); and travel context such as itinerary, dates, etc.

Fields may be activated or not depending on the circumstances. For example, a traveler may be allowed to enter rail preferences only if working in France because the rail network is more sophisticated than in other countries. Similarly, an "employee number" field may only be displayed and mandated in a "staff' profile, as "contractors" will not have such number.

Certain fields may include a default value. For example, a cost center of the corporation may be limited to the user's division. Once the user selects a division, the correct cost center is automatically entered into the profile.

The fields may also include enumeration list restrictions. For example, based on a corporation policy, a frequent flyer program may be restricted to some specific airlines when user is a Manager and to more airlines when user is a Director.

Many other rules and restrictions may apply beyond those which are set out above. Another rule impacts the attributes related to the security levels, namely:the "CreateSecurityLevel", the "UpdateSecurityLevel", the "DeleteSecurityLevel" and the "ReadSecurityLevel"

Attributes may also be used to provide role-based or rules based multilevel security access. Each user will have at least one role and each role will consist of one or more functions that may be performed within the system at various levels of the system hierarchy. Corporations are organized in such a way that they can have different roles based on the context and thus, can provide or have different levels of accesses. A Role is a method of assigning functional permission to a user at one time with minimal effort. For example 1, an administrator may be able to update the VIP indicator field, but not the traveler himself, even if he can see it. In another example, a company credit card may be visible for an administrator, but may be hidden from a traveler. In a further example, the company billing address (Invoice the Corporation) may be editable for an administrator, but "read only" for a traveler.

Some corporations need to have a more flexible access based on certain rules. It helps to request from the traveler mandatory information when traveling to or from certain countries. In some countries, existing partnerships with local providers may not be available and one field could be displayed instead of another one. When a rule is met, one or more attribute will apply individually to each field defined by a rules engine. For example, the maiden name for women is mandatory if traveling to US, but not used or disabled if traveling elsewhere. Dedicated custom fields may be configured for different integrated partners that are available in certain countries only or where there are existing partnerships with local providers. If traveling to these countries, the dedicated custom fields are available, but disabled if traveling elsewhere.

It should be noted that rules may take many forms and are defined by the corporation at or before deployment. Rules may be updated by users with the appropriate level of permissions. Rules may relate to business aspects corporation rules and regulations, permissions, roles and many other factors within the business in question.

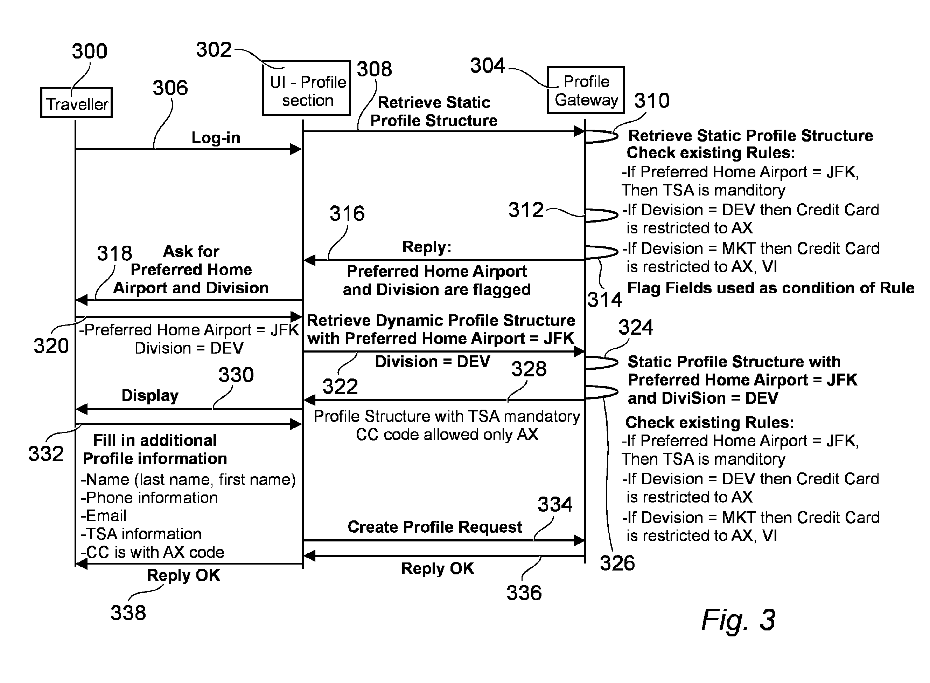

Referring to figure 3, the creation of a dynamic profile will now be described. A traveler or user 300 interfaces with a user interface (UI) profile section 302 which in turn interfaces with a profile gateway 304. A user logs in at step 306. The UI 302 requests retrieval of a dynamic profile structure from the profile gateway at step 308. The profile gateway retrieves a static profile structure 310; checks for existing rules 312; and identifies fields which are used as a condition of a rule. In the example shown the rules that apply are as follows:
a. If preferred home airport = JFK
   Then TSA is mandatory
b. If Division = DEV
   Then creditcard is restricted to AX
c. If Division = MKT
   Then creditcard is restricted to AX; VI.

As there are rules in relation to preferred home airport and division these are flagged at step 314 and sent in the reply 316 to the UI. The UI then asks the user to provide the preferred home airport and division at step 318. The user replies in step 320 and the UI requests retrieval of a dynamic profile structure having the fields indicated by the user at step 322. The profile gateway produces a profile including the user indicated fields at step 324. The profile will also include other fields as defined by the static profile or as defined by an appropriate rule. On checking the rules at step 326, the profile gateway identifies that the TSA field is mandatory and credit card restrictions apply. This is communicated to the UI in a step 328 by sending the profile structure including the required field. The user interface displays the profile structure to the user and asks the user to fill in necessary fields at step 330. The necessary fields in this example are: name, phone information, email; TSA information; and credit card must be AX. The latter two fields were introduced into the dynamic profile by means of a rule. This is completed by the user at step 332 and the UI requests creation of the profile request. As all the mandatory fields are completed the profile gateway accepts the profile and acknowledges this to the UI at step 336. The UI then notifies the user that the user profile is good at step 338.

The above example is a simple example. However, it will be clear that any combination of fields, rules, attributes, constraints, etc. can be used to generate a dynamic profile having whatever requirements are necessary for a particular use case. Different dynamic profiles can be used for different use cases. The variations are endless but are all part of a process of combining field, rules, attributes, constraints, etc. in a flexible way to enable easy generation of a dynamic user profile on corporation rules.

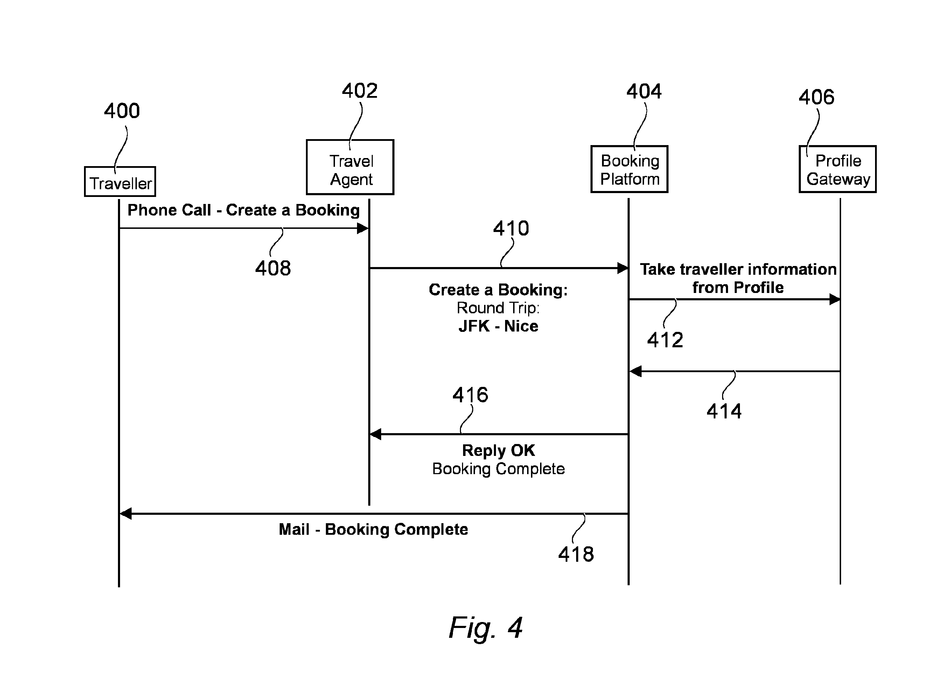

As a result of the dynamic profile creation the user can now purchase a travel ticket with great ease. This can be seen with reference to figure 4. User 400 calls a travel agent 402 in a step 408 to create a travel booking. The travel agent contacts a booking platform 404 with a request to create a booking 410. The booking platform requests profile information in a step 412 from the profile gateway 406. The profile is returned in step 414 and the booking is completed. The booking platform communicates the completion of the booking to the travel agent at step 416 and by email or other means to the user at step 418.

Due to the existence of the dynamic profile the user only needs to make a single call to request a booking. All information required to complete the booking is already included in the dynamic user profile. So the user has no need to contribute any more information.

It should be noted that the dynamic user profile can be validated and checked for consistency when it is created, updated, or at any other necessary time. This may be carried out using a check sum process or any other appropriate method and is based on the original data used to create the dynamic user profile. The validation or consistency check may occur immediately after any significant action has taken place with respect to the dynamic user profile.

The dynamic user profile has been described with reference to fields. As previously indicated, the nature of the fields is endless. The fields may be mandatory, optional, conditional or any other type. The fields may include spaces to be completed by a user; automatic fields which are populated based on another field, a rule, constraint or whatever; fields which calculate a value; or any other appropriate type. Some dynamic user profiles may include fields and other elements, such as attributes, constraints, text information etc. Each dynamic user profile will be adapted to its use case and the corporation rules. The dynamic user profiles for a specific corporation may be stored in a central repository dedicated to the corporation or in any other appropriate database or memory location, dedicated or shared.

A person skilled in the art will understand that some or all of the functional entities as well as the processes themselves may be embodied in software, or one or more software-enabled modules and/or devices or in any combination thereof. The software may operate on any appropriate computer or other machine. The operation of the invention provides a number of transformations such as changes to profiles, updates, etc.

This invention has been described with reference to the purchase of tickets in the travel environment. However, it will be appreciated that the invention may apply to other environments.

It will be appreciated that this invention may be varied in many different ways and still remain within the intended scope of the invention.

## Claims

1. A method of generating a dynamic user profile for a user accessing products and/or services from a Travel Agent based on customer defined rules, the method comprising:
- determining via a computer a static user profile for a particular use case;
- determining via a computer one or more customer defined rules that apply to the use case;
- determining via a computer a set of required fields for the dynamic user profile for the use case based on the applicable customer defined rules using the dynamic user profile to collect the required fields from the user in use.

2. The method of claim 1, further comprising storing the dynamic user profile in a central database for access by the Travel Agent for future actions.

3. The method of claim 1 or claim 2, wherein the step of determining rules comprises determining rules which relate to the use case and apply to the user based on one or more particular fields relating to the user.

4. The method of claim 3, further comprising collecting initial information from a user to determine the one or more particular fields.

5. The method of any preceding claim, further comprising selecting via a computer a list of relevant rules from a repository of rules.

6. The method of any preceding claim, further comprising validating the dynamic user profile.

7. A computer program comprising instructions for carrying out the steps of the method according to any one of claims 1 to 6, when said computer program is executed on a computer system.

8. The system for generating a dynamic user profile for a user accessing products and/or services from a Travel Agent based on customer defined rules, the system comprising:
- a first module for determining via a computer a static user profile for a particular use case;
- a search module for determining via a computer one or more customer defined rules that apply to the use case;
- a second module for determining via a computer a set of required fields for the dynamic user profile for the use case based on the applicable customer defined rules using the dynamic user profile to collect the required fields from the user in use.

9. The system of claim 8, wherein the dynamic user profile is stored in a central database for access by the Travel Agent for future actions.

10. The system of claim 8 or claim 9, wherein the rules relate to the use case and apply to the user based on one or more particular fields relating to the user.

11. The system of any of claims 8 to 10, wherein initial information is collected from the user to determine the one or more particular fields.

12. The system of any of claims 8 to 11, further a list of relevant rules selectable from a repository of rules.

13. The method of any preceding claim, further comprising validating the dynamic user profile.
